# FASCICULE DE BREVET EUROPEEN

(11) **EP 1 049 018 B1**
(45) Date de publication et mention de la délivrance du brevet: **03.12.2008**
(21) Numéro de dépôt: 00401036.9
(22) Date de dépôt: 13.04.2000
(51) Int. Cl.: G06F 12/08, G06F 15/173

(54) **Architecture d'interconnexion modulaire pour machine multiprocesseur extensible, mettant en oeuvre une hiérarchie de bus virtuelle à plusieurs niveaux et la même brique de base pour tous les niveaux**
Modulare Verbindungsarchitektur für erweiterbare Mehrrechnermaschine, die eine virtuelle Bushierarchie mit verschiedenen Stufen, wobei in jeder Stufe das gleiche Grundelement enthalten ist, anwendet
Modular interconnection architecture for expandable multiprocessor engine, implementing a virtual bus hierarchy comprising a plurality of levels, each level comprising the same basic element

(30) Priorité: 26.04.1999 FR 9905266
(43) Date de publication de la demande: 02.11.2000
(73) Titulaire: Bull SAS, 78340 Les Clayes-sous-Bois (FR)
(72) Inventeur: Autechaud, Jean-François, 92210 Saint-Cloud (FR)
(74) Mandataire: Pellegrini, Marie Claude

(56) Documents cités:
- EP-A- 0 603 801
- EP-A- 0 817 076
- SIHIN-ICHITO MORI: "A distributed shared memory and cache architectures" SUPERCOMPUTING 93, 15 - 19 novembre 1993, pages 740-749, XP000437411 LOS ALAMITOS

## Description

La présente invention se rapporte au domaine des machines multiprocesseurs à architecture symétrique comportant des mémoires à temps d'accès uniforme et à cohérence d'antémémoire, plus connues sous la terminologie anglo-saxonne "CC-UMA SMP" (Cache-Coherent - Uniform Memory Acces Symetrical Multi-Processor).

Elle concerne plus particulièrement une architecture d'interconnexion entre un grand nombre de processeurs organisés en grappes de modules multiprocesseurs, appelés également noeuds d'un système informatique.

Dans de telles machines, un ou plusieurs niveaux d'antémémoire de chaque processeur stocke des données récemment acquises et qui peuvent être réutilisées rapidement évitant ainsi des contentions pour des accès mémoire ultérieurs.

Quand un processeur ne trouve pas les données souhaitées dans son antémémoire, il émet l'adresse de la zone mémoire dont il souhaite lire les données via le bus système.

Tous les processeurs vérifient dans leur antémémoire si à cette adresse ils ont une copie des données la plus récemment mise à jour.

Si un autre processeur a modifié les données, il indique au processeur émetteur qu'il peut récupérer les données contenues dans son antémémoire plutôt que de les demander à la mémoire physique.

Pour qu'un processeur puisse modifier une zone mémoire, il doit obtenir l'autorisation de le faire.

Après une telle modification, tous les autres processeurs qui ont une copie des données qui viennent d'être modifiées, doivent invalider cette copie dans leurs antémémoires respectives.

Un suivi des transactions transitant sur le bus système et un protocole gérant la cohérence d'antémémoire, conserveront les traces de toutes les transactions échangées entre les processeurs.

On distingue de manière classique quatre états fondamentaux du protocole de cohérence des mémoires, normalisé sous le code courant MESI, abréviations anglo-saxonnes pour "Modified state, Exclusive state, Share state, Invalide state".

D'une manière générale, la gestion des échanges entre les mémoires d'un système informatique consiste à mettre à jour ou à invalider des copies d'un bloc de mémoire.

Si l'invalidation est choisie, il est par exemple connu d'ajouter à l'adresse de chaque bloc deux bits représentatifs de l'état du bloc dans la mémoire.

Selon ce protocole et dans chaque noeud, l'état "M" correspond au cas où une antémémoire déterminée est la seule détentrice d'une copie modifiée d'un bloc, dite copie de référence, et où il n'existe pas d'autres copies valides dans le système. Dans ce cas, l'antémémoire détentrice de la copie ayant l'état "M" est responsable de fournir et de mettre à jour la mémoire centrale si elle veut se débarrasser de cette copie. Une copie ayant l'état exclusif "E" est aussi la copie de référence détenue par une antémémoire, mais dans ce cas, la mémoire centrale en a une copie à jour. L'état partagé "S" se rapporte à une copie ayant éventuellement plusieurs détenteurs, mais dont une copie est à jour dans la mémoire centrale. Les détenteurs peuvent être potentiels selon la stratégie de gestion adoptée. Enfin, on trouve l'état de copie invalide "I" quand l'antémémoire a une copie du bloc qui n'est pas valide. Lorsqu'un processeur veut accéder à un bloc à l'état "I", son antémémoire envoie une requête sur le bus système pour acquérir le bloc. Les autres antémémoires et la mémoire centrale couplées au bus système prennent connaissance de cette requête et réagissent en fonction de l'état de la copie que la mémoire correspondante possède. Ainsi, si une antémémoire possède le bloc dans l'état modifié "M", elle fournira le bloc au bus système, permettant ainsi au processeur demandeur d'accéder aux données et à son antémémoire d'acquérir la copie de référence. Il existe encore d'autres états optionnels normalisés ou non.

Une telle gestion est particulièrement adaptée quand plusieurs processeurs modifient fréquemment les données émises via le bus système.

Comme les zones mémoires sont toutes accessibles de la même façon par tous les processeurs, il n'y a plus de problème d'optimisation de la place des données dans une zone mémoire déterminée.

C'est ce qui caractérise l'accès mémoire uniforme UMA.

Ce type de gestion est fiable tant que le bus système n'est pas saturé par un trop grand nombre de processeurs émettant un grand nombre de requêtes d'accès mémoire en même temps.

Avec l'accroissement du niveau d'intégration des composants, on peut ranger de plus en plus de processeurs sur une même carte et la vitesse des processeurs s'accroît de 55 % par an.

Un article de Alan Charlesworth (Sun Microsystems) publié dans IEEE Micro de janvier/février 1998, pages 39-49, décrit une architecture d'interconnexion entre plusieurs noeuds, adaptée à de telles contraintes.

Cette architecture d'interconnexion utilise un protocole de commutation par paquets permettant de séparer les requêtes et les réponses et laissant se chevaucher sur le bus des transactions entre plusieurs processeurs.

D'autre part, elle utilise un entrelacement de plusieurs bus de contrôle. Ainsi, l'utilisation de quatre bus d'adresses permet de contrôler quatre adresses en parallèle. L'espace en mémoire physique est divisé par quatre et chaque bus d'adresses vérifie un quart de la mémoire.

Avec une telle architecture, on peut connecter entre 24 à 64 processeurs utilisant 4 bus d'adresses et un autocommutateur, connu également sous la terminologie anglo-saxonne "crossbar", entre chaque noeud ; chaque noeud comportant au minimum quatre processeurs.

L'interconnexion des modules utilise le protocole de cohérence de mémoire défini précédemment et permet de faire des transactions entre modules entre deux niveaux d'interconnexion :
- un premier niveau d'interconnexion, au niveau du noeud, convoyant le trafic interne du noeud, émanant des processeurs et des mémoires, vers les adresses de sortie du noeud et des ports de données ; et
- un deuxième niveau d'interconnexion, de niveau supérieur, transférant les adresses et les données entre les différents noeuds du système.

Les requêtes d'accès mémoire (commandes et adresses) sont diffusées vers l'ensemble des noeuds pour consultation de leurs répertoires afin de localiser la donnée à laquelle un processeur du système veut accéder.

Le temps d'accès mémoire est indépendant du noeud où la mémoire physique est localisée.

On distingue en outre deux types d'interconnexion suivant le type d'information traitée : une interconnexion dans l'espace d'adressage et une interconnexion dans l'espace des données.

Une telle architecture est décrite dans le document EP 0817076 A1.

Un des inconvénients d'une telle architecture réside notamment dans l'utilisation d'un "crossbar" comportant un nombre important de points de connexions et donc encombrant, centralisé sur le fond de panier, sur lequel les noeuds constituant la machine sont connectés.

Cette architecture nécessite d'autre part un fond de panier "actif", c'est-à-dire comportant des composants logiques, par opposition à un fond de panier "passif' sans composant logique.

Dans ce type de machines, on est obligé de dupliquer le "crossbar" pour arriver à une bonne disponibilité et en cas de panne, on perd une partie de la bande passante utile.

Une telle machine n'est donc pas propice à l'adaptation de nouveaux modules multiprocesseurs pour différentes configurations de machines et s'oppose ainsi à la modularité recherchée.

L'invention a notamment pour but de pallier ces inconvénients.

Un but de la présente invention est de proposer une architecture d'interconnexion modulaire permettant d'absorber les trafics de tous les modules multiprocesseurs avec une capacité variable en nombre de processeurs.

A cet effet, l'invention a pour premier objet une architecture d'interconnexion modulaire pour machine multiprocesseur extensible, basée sur une hiérarchie de bus virtuelle, comportant un nombre déterminé de modules multiprocesseurs organisés en noeuds et répartis sur au moins deux niveaux d'interconnexion : un premier niveau correspondant à l'interconnexion des modules multiprocesseurs à l'intérieur d'un noeud et un deuxième niveau correspondant à l'interconnexion des noeuds entre eux ; le premier niveau d'interconnexion comportant des agents de connexion connectant les modules multiprocesseurs entre eux et gérant les transactions entre les modules multiprocesseurs, le deuxième niveau d'interconnexion comportant des noeuds de connexion externes connectant les noeuds entre eux et gérant les transactions entre les noeuds.

L'architecture d'interconnexion selon l'invention est caractérisée en ce que les agents de connexion et les noeuds de connexion externes ont respectivement la même structure de base, la même interface externe et mettent en oeuvre le même protocole de gestion de cohérence des antémémoires des processeurs.

L'invention a pour deuxième objet un procédé de suivi des blocs de données à l'intérieur d'une architecture d'interconnexion définie ci-dessus, caractérisé en ce qu'il consiste, dans le premier niveau, à ne dupliquer dans les mémoires associatives que les blocs de données modifiés dans les antémémoires des modules multiprocesseurs et à ne suivre que ces blocs modifiés à l'intérieur du noeud.

Le procédé consiste, dans le deuxième niveau à ne dupliquer dans les mémoires associatives des agents de connexion de chaque noeud de connexion externe que les bloc modifiés et exportés, réciproquement importés, et à ne suivre que ces blocs modifiés exportés, réciproquement importés, entre chaque noeud de la machine.

L'invention a pour troisième objet un procédé d'extension de la capacité d'une machine comportant un premier nombre déterminé de processeurs de premier niveau organisé en un premier nombre déterminé de modules multiprocesseurs et aptes à s'insérer dans une architecture d'interconnexion telle que définie ci-dessus, caractérisé en ce qu'il consiste, à retirer un des modules multiprocesseurs de premier niveau de son agent de connexion et à connecter via cet agent de connexion laissé libre, un deuxième nombre déterminé de processeurs organisés en un deuxième nombre déterminé de modules multiprocesseurs également aptes à s'insérer dans une architecture d'interconnexion telle que définie ci-dessus.

Enfin, l'invention a pour quatrième objet une machine multiprocesseur multinodale extensible, caractérisée en ce qu'elle comporte une architecture d'interconnexion telle que définie ci-dessus.

L'invention a notamment pour avantage d'être modulaire et extensible à volonté.

En effet, elle permet en utilisant toujours la même brique de base, typiquement un module quadri-processeur associé à son agent de connexion NCS, ou "Network ChipSet" en terminologie anglo-saxonne, d'adapter le nombre de processeurs nécessaire pour couvrir une gamme très large de machines telles que des machines UMA, quasi UMA, NUMA (Non UMA), Cluster (terme utiliser pour désigner un ensemble de machines connectées au moyen d'un SAN ( System Area Network : réseau au niveau système),... et de supporter différents systèmes d'exploitation (NT, UNIX ...).

NT et UNIX sont des marques déposées et appartiennent respectivement à Microsoft et X/Open.

La structure de la brique de base précédemment définie est généralement supportée par la même puce de silicium.

La présente invention s'affranchit d'autre part d'un "crossbar" actif, en fond de panier (fond de panier actif).

D'autres avantages et caractéristiques de la présente invention apparaîtront à la lecture de la description qui suit faite en référence aux figures annexées qui représentent :
- la figure 1, un exemple d'architecture d'interconnexion selon l'invention suivant un premier niveau d'interconnexion MI ;
- la figure 2, le schéma fonctionnel d'un agent de connexion NCS selon l'invention ;
- la figure 3, un exemple d'architecture d'interconnexion selon l'invention suivant un deuxième niveau d'interconnexion SI ;
- la figure 4, l'architecture d'interconnexion des figures 1 et 3, développée suivant les deux niveaux d'interconnexion Ml et SI ;
- la figure 5, le schéma fonctionnel d'un noeud Nj de connexion externe NCE connectant le réseau de premier niveau Ml au réseau de deuxième niveau SI, selon l'invention ;
- la figure 6, une architecture d'interconnexion de premier niveau Ml à cinq noeuds Nj dans laquelle un des noeuds Nj est utilisé pour connecter le réseau de deuxième niveau SI ;
- la figure 7, le schéma bloc de l'espace de commande et d'adressage de l'agent de connexion NCS de la figure 2 ;
- la figure 8, une architecture d'interconnexion selon l'invention dans laquelle le deuxième niveau d'interconnexion SI est réduite à un lien.

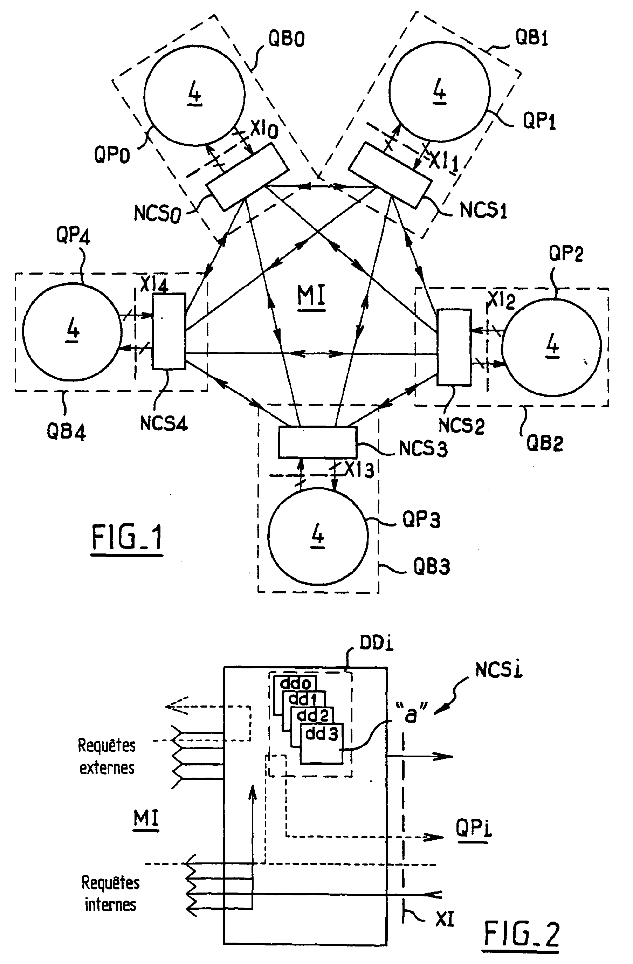

La figure 1 illustre schématiquement une architecture d'interconnexion pour une machine quasi UMA, localisée typiquement sur le fond de panier d'une armoire informatique.

Dans cet exemple, cinq modules multiprocesseurs QPi, avec i = 0 à 4, sont interconnectés au moyen d'un module d'interconnexion Ml.

Chaque module multiprocesseur QPi comporte quatre processeurs et leurs antémémoires respectives, non représentés, et forment un module quadri-processeur.

Les modules quadri-processeurs QPi sont connectés au module d'interconnexion Ml respectivement au moyen d'agents de connexion réseau NCSi.

On définit par Xli (eXternal Interface) les interfaces externes entre les modules quadri-processeurs QPi et leurs agents de connexion respectifs NCSi. Elles sont symbolisées respectivement par un segment de droite en trait interrompu.

On considérera que l'ensemble formé par le module quadri-processeur QPi, son agent de connexion NCSi et son interface externe Xli, constitue une "brique de base" de premier niveau de l'architecture d'interconnexion selon l'invention.

Le module d'interconnexion Ml dans l'exemple illustré comporte cinq briques de base de premier niveau QBi, délimitées respectivement par une ligne fermée discontinue.

Chaque brique de base QBi est reliée aux quatre autres via respectivement quatre liaisons point-à-point, non référencées pour ne pas surcharger la figure.

Ces liaisons sont considérées au niveau protocolaire comme autant de bus virtuels. Il y a ainsi, dans l'exemple décrit, quatre bus virtuels et donc quatre niveaux d'entrelacement traités par chaque agent de connexion NCSi. Chaque bus permet ainsi quatre accès, ou transactions, à chaque cycle d'horloge.

Le protocole selon l'invention permet de gérer les transactions émises sur le module d'interconnexion Ml tous les quatre cycles d'horloge.

Il est basé sur le principe suivant :

Quand un processeur émet une requête sur son bus, par exemple : lire l'adresse de l'antémémoire contenant le bloc de données "a", les seules briques QBi susceptibles d'être élues sont celles où il y a une antémémoire correspondant à cette adresse.

Selon l'invention, on ne veut permettre la transaction que vers la brique QBi comportant effectivement le bloc "a" dans une de ses antémémoires et ne consulter que les briques QBi ayant cette adresse sans perturber les autres.

Pour cela chaque agent de connexion NCSi de l'architecture selon l'invention, illustré schématiquement à la figure 2, comporte une mémoire associative ou quasi associative DDi, également connue sous la terminologie anglo-saxonne de "duplicate directory", délimitée par une ligne fermée discontinue.

Chaque mémoire associative DDi contient une copie du contenu des antémémoires des processeurs d'une brique de base QBi à laquelle elle est dédiée.

Le contenu des antémémoires est organisé selon quatre niveaux d'entrelacement dd0 à dd3 correspondant respectivement aux quatre processeurs de la brique de base QBi.

Chaque mémoire DDi contient ainsi l'ensemble des répertoires, ou "directories" en terminologie anglo-saxonne, des quatre processeurs des modules QBi, accessibles par une adresse.

Les mémoires associatives DDi sont de taille fixe déterminée en fonction du nombre de processeurs de la brique de base QBi et l'état des mémoires DDi est indicatif de la présence des derniers blocs de données modifiés dans les antémémoires de la brique de base QBi.

Chaque mémoire associative DDi joue ainsi le rôle d'un filtre vis-à-vis de la brique de base QBi à laquelle elle est dédiée en ce sens qu'une transaction n'est effectuée uniquement quand une mémoire associative DDi comporte la dernière copie modifiée du bloc "a".

Les lignes en pointillés matérialisent le trajet, ou "snooping" en terminologie anglo-saxonne, suivi par le protocole pour consulter l'état des mémoires associatives DDi avant de débuter une transaction.

L'agent de connexion NCSi comporte, à droite de la figure, l'interface externe XI pour se connecter à un module quadri-processeur QPi.

Il est couplé, à gauche de la figure, via les quatre liaisons entrantes et sortantes de la figure 1, aux quatre autres briques QBi du module d'interconnexion Ml.

Le protocole selon l'invention est basé sur le principe selon lequel seuls des blocs modifiés sont dupliqués dans les mémoires associatives DDi des agents de connexion NCSi.

On peut ainsi avec une architecture sur un niveau, conforme à celle de la figure 1, et des agents de connexion NCS conformes à la figure 2, interconnecter et traiter le flux de transactions échangé typiquement entre 4 à 20 processeurs.

On considérera dans la suite de la description que cette architecture définit un premier niveau Ml d'une architecture modulaire selon l'invention.

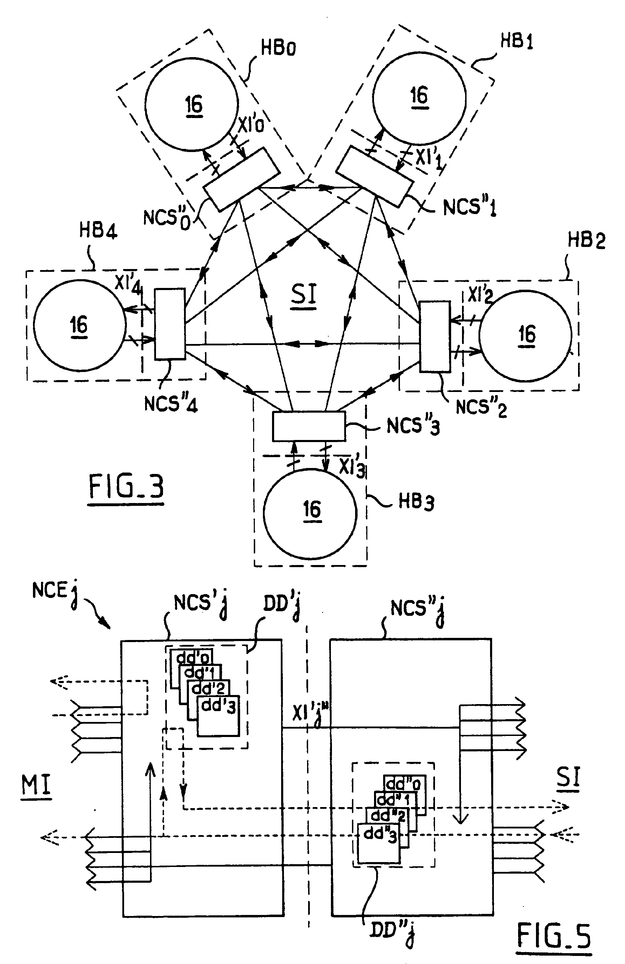

La figure 3 illustre suivant un schéma similaire à celui de la figure 1, un deuxième niveau de l'architecture modulaire définie ci-dessus qui intègre le premier niveau Ml pouvant être considéré comme une brique de base pour le deuxième niveau SI.

Selon ce mode de réalisation, cinq briques de base HBj, avec j=0 à 4, de deuxième niveau sont connectées au système d'interconnexion SI via leurs agents de connexion respectifs NCS"j et leurs interfaces respectives Xl"j. Le système d'interconnexion SI se comporte vis-à-vis des briques HBj du deuxième niveau comme le module d'interconnexion Ml vis-à-vis des briques QBi du premier niveau.

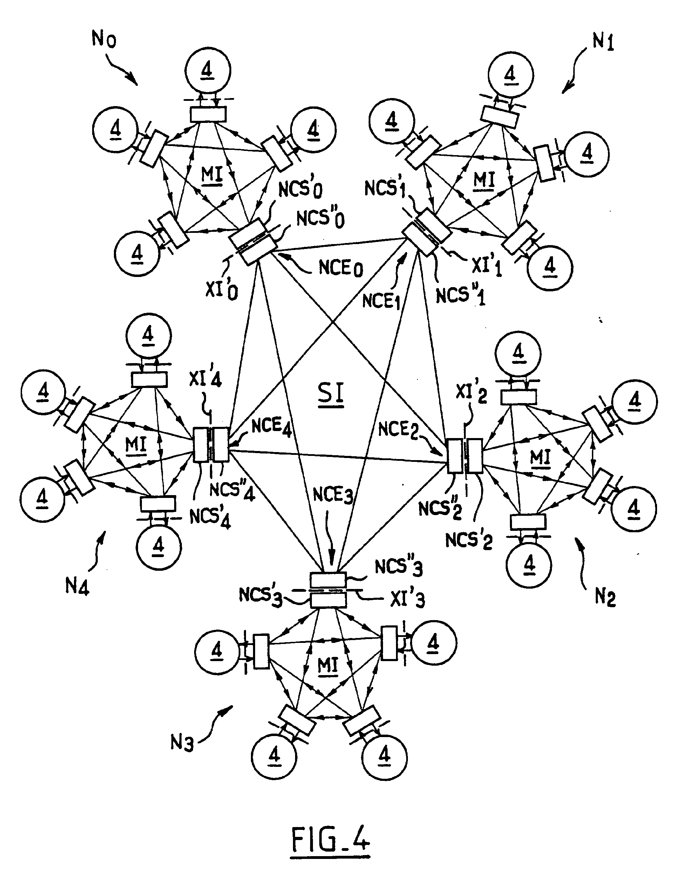

La figure 4 illustre schématiquement une architecture similaire à celle illustrée à la figure 3 développée sur les deux niveaux Ml et SI. Elle permet d'interconnecter typiquement jusqu'à 80 processeurs pour des briques de base de deuxième niveau HBj comportant respectivement 16 processeurs. Chaque brique de base de deuxième niveau HBj comporte respectivement quatre briques de base de premier niveau QBi comportant eux-mêmes respectivement 4 processeurs.

L'extension de la capacité d'une machine consiste à augmenter le nombre de ses processeurs.

Le procédé d'extension selon l'invention, consiste dans une première étape, à retirer un des cinq modules quadri-processeurs QPi de premier niveau, le module QP3 dans l'exemple considéré, de son agent de connexion NCS3 et, dans une deuxième étape, à connecter l'architecture de deuxième niveau SI, en utilisant l'agent de connexion laissé libre, NCS3 dans l'exemple illustré à la figure 1, que l'on rebaptisera NCS'j, avec j=0 dans l'exemple considéré.

Le système d'interconnexion SI est connecté au module d'interconnexion Ml via un agent de connexion NCS"0 disposé tête-bêche par rapport à l'agent NCS'0 ; l'interface externe Xl'0 se situant physiquement entre le premier et le deuxième agent de connexion NCS'0 et NCS"0.

Les deux agents de connexion NCS'j et NCS"j, montés tête-bêche, illustrés schématiquement à la figure 5, sont alors vus par le système d'interconnexion SI comme un seul agent de connexion NCS"j comme représenté à la figure 3.

Les deux agents de connexion NCS'j et NCS"j, montés tête-bêche, et leur interface Xl'j définissent un noeud de connexion externe NCEj par lequel transitent les transactions entre les différents processeurs du premier niveau Ml et ceux du deuxième niveau SI suivant le protocole selon l'invention.

Le protocole selon l'invention permet de gérer la cohérence des différentes antémémoires réparties sur les deux niveaux d'interconnexion Ml et SI en consultant les mémoires associatives respectives des agents NCS'j et NCS"j. Une des particularités du protocole selon l'invention est sa capacité de suivi aussi bien pour une brique de base QBi du premier niveau Ml que pour l'ensemble des briques de base QBi et HBj des deux niveaux Ml et SI.

Pour pouvoir absorber le trafic entre les deux niveaux Ml et SI tout en conservant une même bande passante Xli et Xl"j et une brique de base identique pour les deux niveaux Ml et SI, c'est-à-dire des mémoires associatives DDi, DD'j et DD"j de même dimension quelque soit le nombre de niveaux, la latence du deuxième niveau SI est choisie supérieure à celle du premier niveau Ml. Elle est typiquement égale à un cycle d'horloge pour le premier niveau Ml et égale à deux cycles d'horloge pour le deuxième niveau SI.

Il est ainsi possible de réaliser à partir d'une architecture d'interconnexion modulaire selon l'invention et conforme aux exemples illustrés aux figures 1 à 5, au moins deux types de machines : une première machine de 4 à 20 processeurs et une deuxième machine à plus de 60 processeurs.

On définit deux modes distincts de paramètrage d'un noeud de connexion externe NCEj en fonction du niveau de l'architecture d'interconnexion où se situe l'information recherchée : le mode Ml et le mode SI.

Selon le principe de suivi établi dans le mode Ml, seuls les blocs modifiés sont dupliqués. Dans le mode SI, le suivi n'est effectué que sur les blocs modifiés et exportés. L'exportation de blocs modifiés s'entend du sens allant du premier niveau Ml vers le deuxième niveau SI, soit du niveau inférieur vers le niveau supérieur. Symétriquement, l'importation de blocs modifiés s'entend du sens allant du deuxième niveau SI vers le premier niveau Ml, soit du niveau supérieur au niveau inférieur.

Quand un processeur d'un premier noeud NO demande à lire en exclusivité (lecture et invalidation/read invalidate "a") un bloc "a" situé dans un autre noeud Nj, la requête est alors diffusée à l'ensemble des noeuds Nj via les quatre bus virtuels du système d'interconnexion SI.

Cette diffusion peut être assimilée au mode de diffusion connu sous la terminologie anglo-saxonne "broadcast" s'appliquant à un multibus ; les dix liaisons point-à-point du système d'interconnexion SI se comportant comme quatre bus virtuels au sens protocolaire.

Le noeud de connexion externe NCEj se comporte alors comme un agent externe quand il est paramètré en mode externe.

Dans cette configuration (multinodale), l'acquittement d'une commande d'invalidation est l'agrégat, dans l'agent externe du module requérant, des acquittements partiels émis par les agents externes des autres noeuds Nj.

L'agent NCS" a la même fonction, pour le deuxième niveau (16 processeurs), que l'agent NCS pour le premier niveau (4 processeurs).

Les principales différences de traitement entre l'agent NCSi et l'agent NCS"j sont répertoriées synthétiquement dans le tableau suivant en ce qui concerne les aspects de latence des liaisons, de mémoire associative, de commande d'invalidation et de lecture et d'invalidation :

| | **NCSi (Ml)** | **NCS"j (SI)** |
|---|---|---|
| latence des liaisons | 1 cycle d'horloge (fond de panier) | 2 cycles d'horloge (câbles) |
| mémoire associative | duplication des 4 antémémoires des processeurs | duplication partielle des 16 antémémoires des processeurs du noeud (ce sont uniquement les blocs importés et modifiés qui sont suivis avec précision |
| invalidation | propagation filtrée vers les antémémoires des 4 processeurs du module | propagation vers les NCSi des 4 briques du module (acquittement explicite au moyen d'une réponse sur le réseau du module Ml) |
| lecture et invalidation | la fourniture des données est conditionnée par l'acquittement de l'invalidation | son acquittement attend l'acquittement des noeuds du système ; pas de blocage des données |

De la même façon, le tableau ci-dessous répertorie synthétiquement les différences de traitement entre un agent NCSi et un agent NCS'j en ce qui concerne les aspects de mémoire associative, de commande d'invalidation et de commande de lecture et invalidation.

L'agent NCS'j est disposé à la même place qu'un agent NCSi et traite des trafics émanant de 64 processeurs au lieu des 4 processeurs traités par l'agent NCSi.

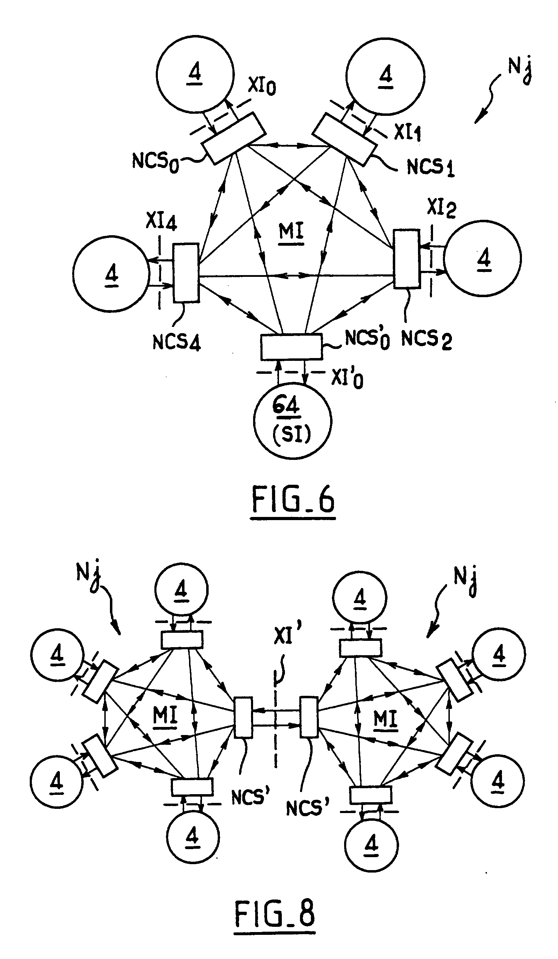

L'architecture considérée pour ce tableau est illustrée à la figure 6.

| | **NCSi** | **NCS'j** |
|---|---|---|
| mémoire associative | duplication des 4 antémémoires des processeurs | duplication partielle des 64 antémémoires (ce sont uniquement les blocs importés et modifiés qui sont suivis avec précision |
| invalidation | propagation filtrée vers les antémémoires des 4 processeurs du noeud | propagation vers les 64 processeurs du deuxième niveau (avertissement explicite) |
| lecture et invalidation | la fourniture des données est conditionnée par l'acquittement de l'invalidation | son acquittement attend l'acquittement des noeuds du système ; pas de blocage des données |

Les interfaces externes Xli et Xl'j ont des bandes passantes similaires.

Quand un bloc demandé est identifié dans une des mémoires associatives DDi des briques de base QBi, le bloc demandé est "exporté" de l'antémémoire contenant la dernière copie du bloc, mise à jour, vers le processeur demandeur. La nouvelle copie valide se trouve alors dans l'antémémoire du processeur demandeur.

C'est le protocole de gestion de cohérence selon l'invention qui recherche dans un premier temps dans quelle mémoire associative DDi se trouve le bloc modifié puis dans un deuxième temps qui recherche quelle mémoire associative DD'j et DD"j du noeud de connexion externe NCEj contient l'information : bloc "a" modifié et exporté. La brique de base QBi contenant le processeur demandeur est également identifiée au sein du noeud Nj.

Le principe est symétrique pour les blocs importés. Par ce principe de suivi basé sur la consultation des mémoires associatives des agents de connexion NCSi et des noeuds de connexion externes NCEj, la bande passante peut rester constante pour les deux niveaux et absorber des trafics disparates entre les différentes briques de base de premier et de deuxième niveau QBi et HBj.

Le protocole de gestion de cohérence mémoire selon l'invention est ainsi capable de permettre à l'architecture d'absorber un trafic de transactions dans le pire cas où quatre des cinq briques de deuxième niveau HBj rechercheraient simultanément un bloc dans la cinquième brique.

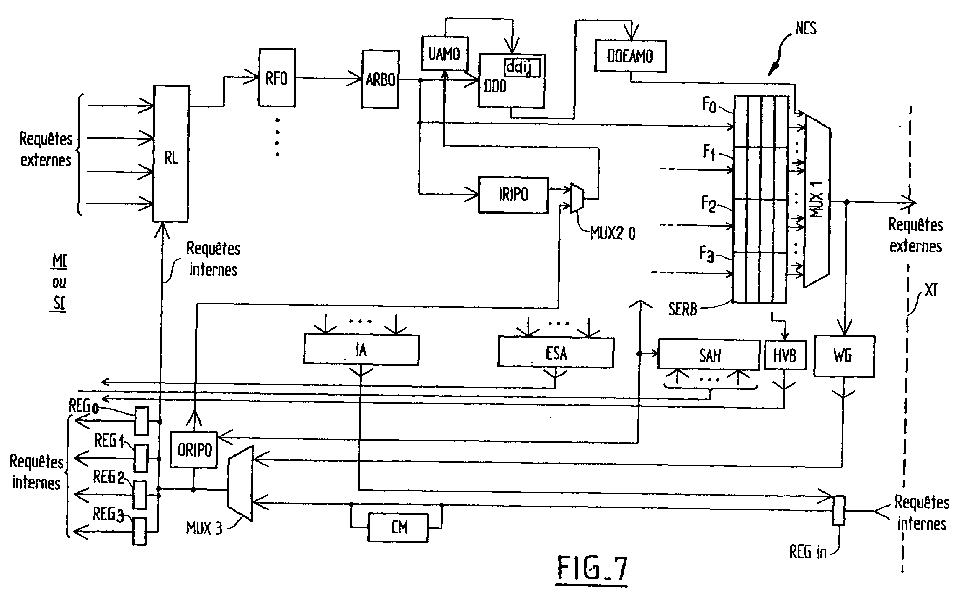

La figure 7 illustre le schéma bloc d'un agent de connexion NCSi selon l'invention considéré dans l'espace de commande et d'adressage.

La description de ce schéma permettra de mieux comprendre le protocole de gestion de cohérence mis en oeuvre par l'agent de connexion NCSi selon l'invention.

Toutes les principales fonctions mises en oeuvre dans les premier et deuxième niveaux Ml et SI sont représentées.

Afin de simplifier la figure, seuls les blocs se rapportant au premier niveau (i = 0) des quatre niveaux d'entrelacement sont représentés.

Un premier bloc RL réalise un classement logique des requêtes externes reçues à l'entrée de l'agent (à gauche suivant la figure). Les requêtes sont ordonnées de la même façon quelque soit la brique de base émettrice. Pour chacune des entrées, le bloc RL a la capacité de prendre en compte plusieurs requêtes reçues simultanément pour éviter la perte de requêtes en cas d'arrêt inopiné du flux de requêtes.

Des filtres logiques RFi, reçoivent respectivement les requêtes, dans l'ordre imposé par le bloc RL. Ils filtrent respectivement toutes les requêtes attribuées au même niveau d'entrelacement i et au même identifiant système de la brique de base.

Des blocs d'arbitrage ARBi sont couplé respectivement en sortie des filtre RFi. Ils sélectionnent une requête suivant un algorithme déterminé par exemple un algorithme équitable du type circulaire, "Round Robin Algorithm" en terminologie anglo-saxonne, dans lequel la dernière requête élue devient la moins prioritaire.

Des mémoires associatives DDi sont respectivement couplées en sortie des blocs d'arbitrage ARBi. Chaque mémoire associative DDi contient une copie ddij du contenu de l'antémémoire de chaque processeur d'une brique de base. En mode SI, les mémoire associatives DD"j et DD"j contiennent respectivement soit une copie des blocs modifiés exportés soit une copie des blocs modifiés importés suivant le sens de la transaction entre les deux niveaux Ml et SI.

Pour forcer une entrée, c'est-à-dire imposer une nouvelle donnée sur une entrée, une commande d'invalidation ou de lecture et invalidation est nécessaire pour pouvoir réutiliser une antémémoire déjà validée dans la mémoire associative DDi.

Pour cela, des extensions DDEAMi aux mémoires associatives DDi sont couplées sur leurs sorties et sont destinées à retarder les transactions destinées à transiter sur le bus en attendant que le bus soit libre (idle).

Toutes les requêtes sont sérialisées en sortie des blocs d'arbitrage ARBi et sont ensuite stockées dans une mémoire tampon SERB dans laquelle elles sont agencées suivant leur statut (internallexternal, home/remote, hit/miss, shared/exclusive/modified), dans quatre files d'attente Fi correspondant respectivement aux quatre niveaux d'entrelacement i = 0 à 3. A chaque cycle d'horloge, quatre requêtes peuvent être ainsi acceptées.

Un multiplexeur MUX1, à droite de la figure, reçoit les requêtes externes des quatre files d'attente Fi et après validation par les extensions mémoire DDEAMi, les requêtes sont émises, en sortie de l'agent de connexion NCS correspondant également à la sortie du multiplexeur MUX1, une par une sur le bus de la brique de base destinataire.

Des blocs UAMi assurent la mise à jour des mémoires associatives DDi. Il y a un bloc par mémoire associative. Ces blocs UAMi stockent les mises à jour qui doivent être effectuées dans les mémoires associatives DDi et elles sont exécutées quand il n'y a pas de trafic ou, simultanément, par toutes les briques de base.

Des blocs mémoire IRIPi stockent toutes les transactions destinées à une même brique de base et qui doivent attendre un événement de fin de transaction du type :
- fin d'accès en mémoire principale (lecture d'une transaction S, I) ;
- mise à jour de la mémoire principale (lecture d'une transaction partielle d'écriture M, E). Dans le cas E, les données peuvent être invalidées signifiant ainsi que le détenteur potentiel ne détient plus les données et que le "home", c'est-à-dire l'antémémoire locale contenant le bloc de données, doit les lui fournir ;
- fin d'émission d'une commande d'invalidation ;
et les transactions qui ont abouti à un "hit E" ou "hit M" dans la brique de base, c'est-à-dire un accès qui a abouti dans l'état E, ou un accès qui a abouti dans l'état M, et qui doivent attendre un événement déterminé pour les terminer : fin de lecture et invalidation sur le bus système de la brique de base.

Un bloc logique IA reçoit les réponses concernant les requêtes internes, délivrées par les blocs d'arbitrage ARBi, et indique pour chacune d'elles si elles ont abouti "hit" ou échoué "miss" (différer : attendre son tour ou réessayer pour cause de conflit).

Un bloc ESA reçoit les réponses aux consultations des mémoires associatives DDi et diffuse ces résultats vers les autres briques de base.

Un bloc SAH reçoit et analyse les réponses à des consultations de types suivants :
- consultation de type lecture (Read) :
   - valide ou efface une demande de lecture anticipée et attend une mise à jour du bloc (mode MI) ;
   - prépare une réponse à l'émetteur de requête et au processeur détenteur du bloc demandé s'il est différent (mode SI) ;
- consultation de type écriture partielle (PartialWrite) :
   - prépare la mise à jour du bloc du processeur détenteur ; écriture dans le bloc (mode SI).

Un bloc HVB reçoit des informations sur l'état de remplissage de certains blocs mémoire tels que les blocs UAMi, DDEAMi et informe les autres briques de base en cas du prochain débordement d'un de ces blocs pour qu'elles cessent d'émettre des requêtes à destination de ces blocs.

Une requête en écriture partielle (PartialWrite) est vue par une brique de base distante comme une requête de lecture et invalidation.

Un bloc générateur d'écriture WG recueille les requêtes émises sur le bus, en sortie de l'agent de connexion, correspondant également à la sortie du multiplexeur MUX1, et met à jour la brique de base locale en fusionnant les données qui ont été écrites partiellement et les données qui ont été lues.

Des blocs ORIPi stockent toutes les opérations demandées par une brique de base déterminée (requête en lecture en attente de données, requête d'invalidation en attente d'acquittement, ...). Ces blocs examinent les requêtes destinées à chaque noeud Nj et émanant d'une brique de base, non représentée et qui serait à droite sur la figure, pour détecter une collision entre les requêtes locales sortantes (outbond) en cours de traitement et les requêtes distantes entrantes (inbond).

Les sorties respectives aux blocs ORIPi et IRIPi sont multiplexées par des multiplexeurs MUXi dont les sorties sont respectivement couplées aux entrées des blocs UAMi. Les mises à jour des mémoires DDi sont effectuées soit sur une transaction émanant des requêtes externes via les blocs IRIPi et qui rentrent donc sur l'agent de connexion NCS (en haut, à gauche de la figure), par exemple quand un processeur d'un noeud Nj déterminé veut lire un bloc déterminé, soit sur une transaction émanant des requêtes internes via le bloc ORIPi et qui sortent de l'agent de connexion NCS (en bas à gauche de la figure), par exemple quand un bloc est "expulsé" du cache d'une antémémoire d'un processeur déterminé.

Un bloc CM recueille l'identifiant système de la brique de base où se trouve l'espace mémoire recherché (l'antémémoire du processeur hébergeant le bloc objet de la requête est là !).

Un bloc SAH reçoit sur une première série d'entrées les réponses aux consultations des autres briques de base. Il effectue la synthèse de ces réponses, ce qui permet de valider ou d'invalider les lectures externes anticipées et aussi de savoir si une requête sera honorée en interne ou en externe.

En fait, les entrées du bloc SAH local correspondent aux sorties des blocs ESA des autres briques de base.

Un multiplexeur MUX3, en bas à gauche de la figure, reçoit les requêtes internes et les opérations d'écriture bloc liées à des écritures partielles délivrées par le bloc WG. Il permet de sérialiser les requêtes qui sont ensuite diffusées vers les quatre autres briques de base, respectivement sur les quatre liens reliant la brique de base émettrice aux autres briques, via respectivement quatre registres de sortie REGO à REG3.

Un cinquième registre REGin, à droite de la figure, est le registre d'entrée de l'agent NCS. Il reçoit les requêtes internes arrivant sur la brique de base. Il est commandé par l'information délivrée par le bloc logique IA.

Un même agent de connexion NCS dont une description fonctionnelle vient d'être donnée ci-dessus peut être utilisé dans trois applications différentes :
- pour la connexion d'un module quadri-processeur QPi au module Ml (figure 1) ;
- pour la connexion d'un noeud Nj au système SI (figures 3, 4 et 6) ; et
- pour la connexion de deux noeuds Nj (figure 8).

Ces trois applications sont mises en oeuvre par un même composant (chipset).

Le traitement et le trajet des données par l'agent de connexion NCS ne sont pas représentés.

Ils se limitent au routage des données soit de l'interface XI vers le module MI ou le système SI, soit dans le sens inverse, au multiplexage des données provenant du module Ml ou du système SI.

Le traitement des données est commandé par l'espace d'adressage de l'agent de connexion NCS. Cet espace supervise tous les flux entrant et sortant des données et effectue si nécessaire, la traduction entre étiquettes de données externes ou internes.

L'interface XI est une interface démultiplexée et comporte donc une partie commande/adresse et une partie données.

Dans le but d'éviter qu'une réponse de lecture double une commande d'invalidation, la réponse de lecture doit attendre que toutes les commandes, sérialisées avant la requête en lecture, aient été émises sur le bus système du module quadri-processeur.

La figure 8 illustre une variante de réalisation d'une architecture selon l'invention.

Cette variante correspond à une configuration intermédiaire limitée à l'interconnexion entre deux noeuds Nj de cinq modules quadri-processeurs QPi chacun.

Dans cette configuration, sur un des module QPi de chaque noeud Nj on ne conserve uniquement que l'agent de connexion NCS' et on connecte les deux noeuds Nj entre eux via leurs agents de connexion NCS' respectifs.

On obtient ainsi une machine 32 processeurs avec un second niveau d'interconnexion se réduisant à un lien.

Ainsi, une interconnexion sans réseau système SI est possible en utilisant seulement deux agents de connexion NCS', couplés tête-bêche, avec pour seule interface externe une interface de type XI'.

La latence du système est améliorée et la bande passante XI' permet de supporter une équirépartition des données entre les deux noeuds Nj. On peut ainsi étendre le nombre de processeurs de 20 à 32 sur un même support de système d'exploitation d'une machine NUMA ou quasi UMA.

## Revendications

1. Architecture d'interconnexion modulaire pour machine multiprocesseur extensible, basée sur une hiérarchie de bus virtuelle, comportant un nombre déterminé de modules multiprocesseurs (QPi) organisés en noeuds (Nj) et répartis sur au moins deux niveaux d'interconnexion : un premier niveau (MI) correspondant à l'interconnexion des modules multiprocesseurs (QPi) à l'intérieur d'un noeud (Nj) et un deuxième niveau (SI) correspondant à l'interconnexion des noeuds (Nj) entre eux ; le premier niveau d'interconnexion (MI) comportant des agents de connexion (NCSi) connectant les modules multiprocesseurs (QPi) entre eux et gérant les transactions entre les modules multiprocesseurs (QPi), le deuxième niveau d'interconnexion (SI) comportant des noeuds de connexion externes (NCE) connectant les noeuds (Nj) entre eux et gérant les transactions entre les noeuds (Nj), **caractérisée en ce que** les agents de connexion (NCSi) et les noeuds de connexion externes (NCEj) ont respectivement la même structure de base, la même interface externe (XI) et mettent en oeuvre le même protocole de gestion de cohérence des antémémoires des processeurs.

2. Architecture selon la revendication 1, **caractérisée en ce que** chaque noeud de connexion externe (NCEj) comporte deux agents de connexion identiques (NCSi) couplés tête-bêche ; l'un des deux agents (NCS'j) recevant et filtrant les transactions émises par le noeud (Nj) auquel il est couplé, et l'autre (NCS"j) recevant et filtrant les transactions émises par les autres noeuds (Nj) auxquels il est couplé.

3. Architecture selon la revendication 1, **caractérisée en ce que** chaque agent de connexion (NCSi) comporte une mémoire associative (DDi) de taille fixe déterminée en fonction du nombre de processeurs du module multiprocesseur (QPi) auquel est couplé l'agent de connexion (NCSi) ; l'état des mémoires (DDi) étant indicatif de la présence des derniers blocs de données modifiés dans les antémémoires du module multiprocesseur (QPi).

4. Architecture selon la revendication 2, **caractérisée en ce que** les agents de connexions (NCS'j et NCS"j) comportent respectivement une mémoire associative (DD'j et DD"j) de taille fixe déterminée en fonction du nombre de processeurs des modules multiprocesseurs (HBj) auxquels ils sont couplés ; l'état des mémoires associatives (DD'j et DD"j) étant indicatif de la présence des derniers blocs de données modifiés exportés, et réciproquement importés.

5. Architecture selon la revendication 2, **caractérisée en ce que** les premier et deuxième agents de connexion tête-bêche (NCS'j et NCS"j) n'acceptent des transactions que pour les blocs qui sont modifiés dans leurs mémoires associatives respectives (DD'j et DD"j) ; les blocs de données modifiés dans le premier agent de connexion (NCS'j) sont exportés vers le ou les modules multiprocesseurs demandeur et, réciproquement, les blocs de données modifiés dans le deuxième agent de connexion (NCS") sont importés du ou des modules détenteur des blocs.

6. Architecture selon l'une quelconque des revendications 1 à 5, **caractérisée en ce que** la latence du deuxième niveau d'interconnexion (SI) est le double de la latence du premier niveau d'interconnexion (MI).

7. Procédé de suivi des blocs de données à l'intérieur d'une architecture d'interconnexion selon l'une quelconque des revendications 1 à 6, **caractérisé en ce qu'**il consiste, dans le premier niveau, à ne dupliquer dans les mémoires associatives (DDi) que les blocs de données modifiés dans les antémémoires des modules multiprocesseurs (QPi) et à ne suivre que ces blocs modifiés à l'intérieur du noeud (Nj).

8. Procédé de suivi des blocs de données à l'intérieur d'une architecture d'interconnexion selon l'une quelconque des revendications 1 à 6, **caractérisé en ce qu'**il consiste, dans le deuxième niveau (SI), à ne dupliquer dans les mémoires associatives (DD'j et DD"j) des agents de connexion (NCS' et NCS"j) de chaque noeud de connexion externe (NCEj) que les bloc modifiés et exportés, réciproquement importés, et à ne suivre que ces blocs modifiés exportés, réciproquement importés, entre chaque noeud (Nj) de la machine.

9. Procédé d'extension de la capacité d'une machine comportant un premier nombre déterminé de processeurs de premier niveau (MI) organisé en un premier nombre déterminé de modules multiprocesseurs (QPi) et aptes à s'insérer dans une architecture d'interconnexion selon l'une quelconque des revendications 1 à 6, **caractérisé en ce qu'**il consiste, à retirer un des modules multiprocesseurs (QPi) de premier niveau de son agent de connexion (NCSi), et à connecter via cet agent de connexion laissé libre, un deuxième nombre déterminé de processeurs organisés en un deuxième nombre déterminé de modules multiprocesseurs également aptes à s'insérer dans une architecture d'interconnexion selon l'une quelconque des revendications 1 à 6.

10. Procédé selon la revendication 9, **caractérisé en ce que** le deuxième nombre déterminé de processeurs étant organisé en un deuxième nombre déterminé de modules multiprocesseurs de deuxième niveau (SI), il consiste à le connecter à l'agent de connexion (NCSi) du premier nombre déterminé de processeurs de premier niveau (MI) par l'intermédiaire d'un des agents de connexion (NCS"j) de deuxième niveau.

11. Procédé selon la revendication 10, **caractérisé en ce que** le deuxième nombre déterminé de processeurs étant également de premier niveau (MI), il consiste à connecter les agents de connexion (NCS') respectifs aux premier et deuxième nombre déterminé de processeurs ; le deuxième niveau (SI) se résumant en une liaison unique.

12. Machine multiprocesseur multinodale extensible, **caractérisée en ce qu'**elle comporte une architecture d'interconnexion selon l'une quelconque des revendications 1 à 6.

## Claims

1. Modular interconnection architecture for an expandable multiprocessor machine, based on a virtual bus hierarchy, comprising a given number of multiprocessor modules (QPi) organized into nodes (Nj) and distributed on at least two interconnection levels: a first level (MI) corresponding to the interconnection of the multiprocessor modules (QPi) within a node (Nj), and a second level (SI) corresponding to the interconnection of the nodes (Nj) with one another, the first interconnection level (MI) comprising connection agents (NCSi) that connect the multiprocessor modules (QPi) to one another and handle the transactions between the multiprocessor modules (QPi), the second interconnection level (SI) comprising external connection nodes (NCE) that connect the nodes (Nj) to one another and handle the transactions between the nodes (Nj), **characterized in that** the connection agents (NCSi) and the external connection nodes (NCEj) respectively have the same basic structure, the same external interface (XI), and implement the same coherency control protocol for the cache memories of the processors.

2. Architecture according to claim 1, **characterized in that** each external connection node (NCEj) comprises two identical connection agents (NCSi) connected head-to-tail, one of the two agents (NCS'j) receiving and filtering the transactions sent by the node (Nj) to which it is connected, and the other (NCS"j) receiving and filtering the transactions sent by the other nodes (Nj) to which it is connected.

3. Architecture according to claim 1, **characterized in that** each connection agent (NCSi) comprises an associative memory (DDi) with a fixed size determined as a function of the number of processors in the multiprocessor module (QPi) to which the connection agent (NCSi) is connected; the state of the memories (DDi) being indicative of the presence of the last modified data blocks in the cache memories of the multiprocessor module (QPi).

4. Architecture according to claim 2, **characterized in that** the connection agents (NCS'j and NCS"j) respectively comprise an associative memory (DD'j and DD"j) with a fixed size determined as a function of the number of processors in the multiprocessor modules (HBj) to which they are connected; the state of the associative memories (DD'j and DD"j) being indicative of the presence of the last modified data blocks exported, or conversely imported.

5. Architecture according to claim 2, **characterized in that** the first and second head-to-tail connection agents (NCS'j and NCS"j) only accept transactions for the blocks that are modified in their respective associative memories (DD'j and DD"j); the modified data blocks in the first connection agent (NCS'j) are exported to the requesting multiprocessor module or modules and, conversely, the modified data blocks in the second connection agent (NCS"j) are imported from the module or modules holding the blocks.

6. Architecture according to any of claims 1 to 5, **characterized in that** the latency of the second interconnection level (SI) is double the latency of the first interconnection level (MI).

7. Process for tracing data blocks in an interconnection architecture according to any one of claims 1 to 6, **characterized in that** it consists, on the first level, of duplicating in the associative memories (DDi) only the modified data blocks in the cache memories of the multiprocessor modules (QPi) and of tracing only the modified blocks inside the node (Nj).

8. Process for tracing data blocks in an interconnection architecture according to any one of claims I to 6, **characterized in that** it consists, on the second level (SI), of duplicating in the associative memories (DD'j and DD"j) of the connection agents (NCS'j and NCS"j) of each external connection node (NCEj) only the modified blocks exported, or conversely imported, and of tracing only the modified blocks exported, or conversely imported, between each node (Nj) of the machine.

9. Process for expanding the capacity of a machine comprising a first given number of processors on a first level (MI) organized into a first given number of multiprocessor modules (QPi) and capable of being inserted into an interconnection architecture according to any one of claims 1 to 6, **characterized in that** it consists of disconnecting one of the first-level multiprocessor modules (QPi) from its connection agent (NCSi) and of connecting, via this freed connection agent, a second given number of processors organized into a second given number of multiprocessor modules, also capable of being inserted into an interconnection architecture according to any of claims 1 tao 6.

10. Process according to claim 9, **characterized in that**, the second given number of processors being organized into a second given number of multiprocessor modules on the second level (SI), it consists of connecting it to the connection agent (NCSi) of the first given number of processors on the first level (MI) through one of the connection agents (NCS"j) on the second level.

11. Process according to claim 10, **characterized in that**, the second given number of processors also being on the first level (MI), it consists of connecting the respective connection agents (NCS') to the first and second given numbers of processors, the second level (SI) being reduced to a single link.

12. Expandable multinode multiprocessor machine, **characterized in that** it comprises an interconnection architecture according to any one of claims 1 to 6.

## Patentansprüche

1. Modulare Verbindungsarchitektur für erweiterbare Multiprozessormaschine, die auf einer Hierarchie mit virtuellem Bus basiert, mit einer bestimmten Anzahl von Multiprozessor-Modulen (QPi), die in Knoten (Nj) organisiert sind und auf wenigstens zwei Verbindungsebenen verteilt sind: einer ersten Ebene (MI), die der Verbindung der Multiprozessor-Module (QPi) in einem Knoten (Nj) entspricht, und einer zweiten Ebene (SI), die der Verbindung der Knoten (Nj) untereinander entspricht; wobei die erste Verbindungsebene (MI) Verbindungsagenten (NCSi) enthält, die die Multiprozessor-Module (QPi) miteinander verbinden und die Transaktionen zwischen den Multiprozessor-Modulen (QPi) steuern, und wobei die zweite Verbindungsebene (SI) externe Verbindungsknoten (NCE) enthält, die die Knoten (Nj) miteinander verbinden und die Transaktionen zwischen den Knoten (Nj) steuern, **dadurch gekennzeichnet, dass** die Verbindungsagenten (NCSi) und die externen Verbindungsknoten (NCEj) jeweils die gleiche Basisstruktur und die gleiche externe Schnittstelle (XI) besitzen und dasselbe Protokoll für die Steuerung der Kohärenz der Cache-Speicher der Prozessoren ausführen.

2. Architektur nach Anspruch 1, **dadurch gekennzeichnet, dass** jeder externe Verbindungsknoten (NCEj) zwei gleiche Verbindungsagenten (NCSi) enthält, die zueinander entgegengesetzt gekoppelt sind; wobei einer der zwei Agenten (NCS'j) jene Transaktionen empfängt und filtert, die von dem Knoten (Nj), mit dem er gekoppelt ist, ausgesendet werden, und der andere Agent (NCS"j) jene Transaktionen empfängt und filtert, die von den anderen Knoten (Nj), mit denen er gekoppelt ist, ausgesendet werden.

3. Architektur nach Anspruch 1, **dadurch gekennzeichnet, dass** jeder Verbindungsagent (NCSi) einen Assoziativspeicher (DDi) mit fester Größe, die in Abhängigkeit von der Anzahl der Prozessoren des Multiprozessor-Moduls (QPi), mit dem der Verbindungsagent (NCSi) gekoppelt ist, festgelegt ist, enthält; wobei der Zustand der Speicher (DDi) das Vorhandensein der letzten modifizierten Datenblöcke in den Cache-Speichern des Multiprozessor-Moduls (QPi) angibt.

4. Architektur nach Anspruch 2, **dadurch gekennzeichnet, dass** die Verbindungsagenten (NCS'j und NCS"j) jeweils einen Assoziativspeicher (DD'j und DD"j) mit fester Größe, die in Abhängigkeit von der Anzahl der Prozessoren der Multiprozessor-Module (HBj), mit denen sie gekoppelt sind, festgelegt ist, enthält; wobei der Zustand der Assoziativspeicher (DD'j und DD"j) das Vorhandensein der letzten exportierten bzw. importierten modifizierten Datenblöcke angibt.

5. Architektur nach Anspruch 2, **dadurch gekennzeichnet, dass** der erste und der zweite Verbindungsagent (NCS'j und NCS"j), die zueinander entgegengesetzt gekoppelt sind, nur Transaktionen für die Blöcke akzeptieren, die in ihren jeweiligen Assoziativspeichern (DD'j und DD"j) modifiziert worden sind; wobei die modifizierten Datenblöcke im ersten Verbindungsagenten (NCS'j) zu dem oder den anfordernden Multiprozessor-Modulen exportiert werden bzw. die modifizierten Datenblöcke im zweiten Verbindungsagenten (NCS") von dem oder den Modulen, die die Blöcke enthalten, importiert werden.

6. Architektur nach einem der Ansprüche 1 bis 5, **dadurch gekennzeichnet, dass** die Latenzzeit der zweiten Verbindungsebene (SI) gleich der doppelten Latenzzeit der ersten Verbindungsebene (MI) ist.

7. Verfahren zum Verfolgen von Datenblöcken in einer Verbindungsarchitektur nach einem der Ansprüche 1 bis 6, **dadurch gekennzeichnet, dass** es auf der ersten Ebene darin besteht, in den Assoziativspeichern (DDi) nur die in den Cache-Speichern der Multiprozessor-Module (QPi) modifizierten Datenblöcke zu verdoppeln und nur diese modifizierten Blöcke innerhalb des Knotens (Nj) zu verfolgen.

8. Verfahren zum Verfolgen von Datenblöcken in einer Verbindungsarchitektur nach einem der Ansprüche 1 bis 6, **dadurch gekennzeichnet, dass** es auf der zweiten Ebene (SI) darin besteht, in den Assoziativspeichern (DD'j und DD"j) der Verbindungsagenten (NCS'j und NCS"j) jedes externen Verbindungsknotens (NCEj) nur die modifizierten und exportierten bzw. importierten Blöcke zu verdoppeln und nur diese exportierten bzw. importierten modifizierten Blöcke zwischen jedem Knoten (Nj) der Maschine zu verfolgen.

9. Verfahren zum Erweitern der Kapazität einer Maschine, die eine erste bestimmte Anzahl von Prozessoren einer ersten Ebene (MI), die in einer ersten bestimmten Anzahl von Multiprozessor-Modulen (QPi) organisiert sind und in eine Verbindungsarchitektur nach einem der Ansprüche 1 bis 6 eingefügt werden können, enthält, **dadurch gekennzeichnet, dass** es darin besteht, eines der Multiprozessor-Module (QPi) der ersten Ebene aus seinem Verbindungsagenten (NCSi) zu entnehmen und über diesen freigemachten Verbindungsagenten eine zweite bestimmte Anzahl von Prozessoren zu verbinden, die in einer zweiten bestimmten Anzahl von Multiprozessor-Modulen organisiert sind, die ebenfalls in eine Verbindungsarchitektur nach einem der Ansprüche 1 bis 6 eingefügt werden können.

10. Verfahren nach Anspruch 9, **dadurch gekennzeichnet, dass** es dann, wenn die zweite bestimmte Anzahl von Prozessoren in einer zweiten bestimmten Anzahl von Multiprozessor-Modulen der zweiten Ebene (SI) organisiert ist, darin besteht, sie mit dem Verbindungsagenten (NCSi) der ersten bestimmten Anzahl von Prozessoren der ersten Ebene (MI) über einen der Verbindungsagenten (NCS"j) der zweiten Ebene zu verbinden.

11. Verfahren nach Anspruch 10, **dadurch gekennzeichnet, dass** es dann, wenn die zweite bestimmte Anzahl von Prozessoren ebenfalls zur ersten ebene (MI) gehört, darin besteht, die jeweiligen Verbindungsagenten (NCS') mit der ersten und der zweiten bestimmten Anzahl von Prozessoren zu verbinden; wobei die zweite Ebene (SI) zu einer einzigen Verbindung zusammengefasst ist.

12. Erweiterbare Mehrknoten-Multiprozessormaschine, **dadurch gekennzeichnet, dass** sie eine Verbindungsarchitektur nach einem der Ansprüche 1 bis 6 enthält.
